# EUROPEAN PATENT APPLICATION

(11) **EP 4 807 341 A1**
(43) Date of publication of application: **16.09.2026**
(21) Application number: 25163663.5
(22) Date of filing: 13.03.2025
(51) Int. Cl.: G01N 3/20, G01N 11/14

(54) **BENDING ADAPTER FOR MEASURING MECHANICAL PROPERTIES**

(71) Applicant: TESA SE, 22848 Norderstedt (DE)
(72) Inventor: KHABAZIAN, Masood, 22848 Norderstedt (DE)
(74) Representative: tesa SE

(57) **Abstract**

A bending adapter (10) configured and adapted for use in a rotational rheometer for measuring at least one mechanical property of a sample strip (40), in particular a polymer film strip or any other thin film material, consisting of two bending fixtures (20, 30), each bending fixture (20, 30) having a connecting section (21, 31) which has a central axis (22, 32) in the axial direction and, at its one end, a coupling end (23, 33) for connection to the rotational rheometer, and a measuring section (24, 34), which is arranged with a connecting end (25, 35) at the end of the connecting section (21, 31) that is opposite the coupling end (23, 33) of the connecting section (21, 31) and has a free end (27, 37) at the end opposite the connecting end (25, 35), the two measuring sections (24, 34) each having a measuring surface (26, 36), wherein the two measuring surfaces (26, 36) together with a sample strip (40) to be measured form a hinge (50) rotating about the imaginary extension (52) of the central axes (22, 32) and the measuring sections (24, 34) are arranged relative to one another in such a way that the respective free end (27, 37) of a measuring section (24, 34) of a bending fixture (20, 30) points towards the connecting section (31,21) of the respective other bending fixture (30, 20) provides for a simple and inexpensive solution for providing a measuring entity of the mechanical properties of polymer film strips.

## Description

The present invention relates to a bending adapter for measuring the mechanical properties of a sample strip. The invention further relates to the use of the bending adapter in a rotational rheometer.

In the mobile phone and electronics industry, flexible and foldable displays are increasingly being used due to the enormous demand. Adhesives customized for these displays allow for this bendability and foldability. Newer adhesives are being developed for improved durability and reliability. Ideally, due to improved flexibility displays can sustain repeated bending without becoming completely defective or their performance being affected.

Foldable displays are usually made of synthetic material, in particular specific polymers. Other materials are usually excluded due to their limited bending properties. However, the resilience of a synthetic material can also be affected by multiple bending and folding. In particular, electronics manufacturers offering foldable displays in their product range depend on the reliability of the load-bearing capacity, especially with regard to bending and breaking properties. Before such products are released, their load-bearing limits must be carefully tested and validated so that modifications can be made to the polymer composition if necessary.

While many of the physical properties of synthetic materials can well be examined by rotational rheometers, deformation in bending of the materials cannot be tested with such rheometers for soft and semisoft materials.

It is therefore an object of the present invention to provide for an easy solution for measuring the mechanical properties of adhesives and polymers as well as leather in a bending movement of the material.

The object is achieved by a bending adapter configured and adapted for use in a rotational rheometer for measuring at least one mechanical property of a sample strip, in particular a polymer film strip, consisting of two bending fixtures, each bending fixture having a connecting section which has a central axis in the axial direction and, at its one end, a coupling end for connection to the rotational rheometer, and a measuring section, which is arranged with a connecting end at the end of the connecting section that is opposite the coupling end of the connecting section and has a free end at the end opposite the connecting end, the two measuring sections each having a measuring surface extending axially along an imaginary extension of the central axes of the connecting sections and outwards from the imaginary extension of the central axes of the connecting sections, wherein the two measuring surfaces together with a sample strip to be measured form a hinge rotating about the imaginary extension of the central axes and the measuring sections are arranged relative to one another in such a way that the respective free end of a measuring section of a bending fixture points towards the connecting section of the respective other bending fixture.

Surprisingly, it has been found that the bending adapter according to the invention can be used to measure at least one mechanical property of a sample strip without using a specific apparatus. Instead, with the bending adapter according to the invention, a commonly used standard rotational rheometer, which most laboratories dispose of, can be modified so that properties such as loss modulus, storage modulus, phase angle, LAOS higher harmonics, Lissajous figure related parameters e.g. G'_{L} and G'_{M} or number of deformations to failure of lamellar polymers and adhesives can be determined without the need of specific complex extra equipment. The bending adapter according to the invention is particularly suitable for measuring the mechanical properties of a polymer film strip e.g. used in foldable and bendable displays, rubber or leather industry. With the help of the bending adapter, the fatigue properties of the sample strip can be examined by repeatedly bending and relaxing the sample strip. The bending adapter can be installed on any standard rotational rheometer, eliminating the need for an additional apparatus. The bending adapter is very easy and inexpensive to manufacture. The bending adapter of the present invention thus provides for a simple and inexpensive solution for providing a measuring entity of the mechanical properties of polymer film strips, particularly adhesive films.

By installing the bending adapter according to the invention on a standard rotational rheometer, oscillating stress/strain can be measured precisely. The two bending fixtures are movable relative to each other in a rotating-oscillating manner at a predetermined stress/strain frequency. The oscillation angle between the two bending fixtures is also flexibly adjustable and adaptable to the intended analysis of the sample strip to be measured. Examples of such standard rotational rheometers are ARES G2 or the Discovery HR series of TA Instruments or the MCR series of Anton Paar.

The coupling end of the connecting section of the bending fixture is used for secure installation on a standard rotational rheometer. For separate motor transducer (SMT) rheometers, one bending fixture is preferably connected to the torque sensor of the rotational rheometer and the other bending fixture to the motor of the rotational rheometer. For combined motor transducer (CMT) rheometer one bending fixture is connected to the torque sensor and motor of the rotational rheometer and the other bending fixture to the lower stationary plate of the rotational rheometer In a preferred configuration, the connecting section is arranged as a short fixture for detachable connection to a shaft. This attachment can be easily replaced when damaged, avoiding the need to replace the entire bending fixture, which is very resource-efficient. It is also possible for the measuring section and the connecting section to be made from a single piece. In other words, the measuring section and the connecting section are integrally formed. This reduces both the manufacturing costs and the manufacturing effort.

The measuring surfaces of the measuring sections form a planar mounting or contact surface for the sample strip. The length of the measuring surface should at least correspond to the width of the sample strip to be measured.

The hinge is created by the sample strip that is attached to both of the two stiff measuring sections. This results in a flexible hinge that connects the two measuring sections by forming a thin and flexible section between them.

A preferred embodiment of the invention is characterized in that at least one of the two bending fixtures is movable in an oscillating rotational movement.

This oscillating rotational movement causes the same bending movement to be continuously repeated. This makes it easy to bend the sample strip to be measured. This movement repeatedly simulates the mechanical stress to which the sample strip is subjected during its intended use.

A further preferred embodiment of the invention is characterized in that the oscillation angle between the two bending fixtures is in the range from 0° to 340°, in particular from 20° to 340°, and particularly preferred from 50° to 310°.

The oscillation angle denotes the distance of one bending fixture to the other bending fixture. At 180°, the two measuring surfaces form a planar surface and the attached sample strip is not subjected to any bending or curvature. The movement can be symmetric and asymmetric. For symmetric oscillation the fixture moves to degrees α and goes back to degree of 180° and continues to the angle degree of 360-α. For asymmetric oscillation the fixture goes to angle α, then goes back to 180° and then goes back to the angle α. The advantage of the variable oscillation angle is that, depending on the desired mechanical properties, flexible and individual adjustment to the sample strip to be measured can be carried out.

In a further preferred embodiment, the measuring section is at least substantially a plate.

Using a plate has the advantage that at least the surface on which the sample strip is attached has a planar surface. In addition, a wide oscillation angle - up to almost 340° - can be provided. The thinner the plate, the less the two measuring sections come into contact with each other. Furthermore, the formation of a plate requires very small amounts of material, which results in low manufacturing costs and a low manufacturing effort. Thus, this is both a cost-effective and simple way to provide the measuring sections.

In a particularly preferred embodiment of the invention, the cross-sectional geometry of the measuring section corresponds at least substantially to a sector of a circle, particularly preferably a sector of a circle with an angle of from 20° to 90°.

Manufacturing the measuring section in the form of a section of a circle is a simple option, particularly if the connecting section also has an at least substantially round cross-sectional geometry. Thus, the connecting section and the measuring section would be congruent to each other and the connection end would have a smooth transition to the outside and the outer edge would be free of protrusions and steps. This is also advantageous in that the greatest possible surface is created on the connecting section, leading to a high degree of stability of the measuring section, while at the same time providing a plane measuring surface. This prevents the measuring section from breaking and achieves a high level of durability and a long lifespan. The bending angle achievable as well as the stability of the measuring section depend on the angle of the sector. As a rule of thumb, the larger the angle of the sector, the more stable the measuring section is, while the possible bending angle is smaller, whereas, on the other hand, the smaller the angle of the sector, the larger the possible bending angle is at cost of a somewhat lower stability. A sector of a circle with an angle of from 20° to 40° and particularly an angle of 20° has proven to provide a good compromise of the two features.

According to a further preferred embodiment of the invention, the two measuring sections are arranged adjacent to one another. This ensures in a simple manner that the measuring sections form a maximum surface for the attachment of the sample strip. The oscillating rotational movement of the bending fixture ensures that the sample strip is bent exactly at the adjacent seam.

A preferred embodiment of the invention is characterized in that the two measuring sections are arranged at a distance from one another or - in other words - are spaced apart from each other.

Such distance or spacing apart of the two measuring sections ensures that a wider oscillation angle can be achieved. It also has the advantage that the oscillating rotational movement can be performed without friction. This reduces stress on the bending fixture, resulting in a longer lifetime and thus greater cost efficiency.

A further particularly preferred embodiment of the invention is characterized in that at least one of the two measuring surfaces, preferably both measuring surfaces, has/have a smooth, sandblasted and/or profiled surface.

The surface of the measuring surface forms the substrate to which the sample strip to be measured is attached. In case of an adhesive strip to be tested, the sample strip can adhere particularly well due to the properties of the surface and remain there for extended periods of time. In addition, it is easy to ensure that the surface can be cleaned in a manner that is substantially residue-free and convenient, which leads to improved hygiene.

Still a further advantageous embodiment of the invention is characterized in that at least one of the two measuring surfaces, preferably both measuring surfaces, has/have a sample holder for fastening the sample strip to be measured.

This ensures that the sample strip is securely and accurately attached to the measuring surfaces and cannot accidentally detach during the measurement. This type of sample holder is particularly advantageous for measuring the mechanical properties of a sample strip with low or no adhesive properties.

A preferred embodiment of the invention is characterized in that the measuring section and/or the connecting section consists of a metal, particularly preferably steel, titanium or aluminum.

With the material selected, in particular in the case of metal, desired and advantageous properties such as stability and durability can be imparted to the respective components of the bending adapter. This prevents the measuring section and/or the connecting section from breaking and ensures a long lifetime. Preferably, the metal can be variably adapted to the desired or prevailing product (sample strip) and operating conditions and can be selected either uniformly or differently for the measuring section and the connecting section.

The object of the present invention is also achieved by the use of the bending adapter described above in a rotational rheometer for measuring at least one mechanical property of a sample strip, in particular a polymer film strip.

Foldable displays are often exposed to enormous stress, as they are subjected to a large number of bends during intended use. In a rotational rheometer, the fatigue properties of the adhesive of these foldable displays can be simulated using the bending adapter according to the invention and thus measured and recorded in a controlled manner. The bending adapter can be installed on any standard rotational rheometer such as a rotational rheometer of ARES G2 or the Discovery HR series of TA Instruments or the MCR series of Anton Paar.

The use of the bending adapter is particularly useful for determining the bending and breaking properties of the sample strip. Oscillating rotational movement of the bending adapter can be performed multiple times to determine the stress limit and the bending and breaking properties of the sample strip. Particularly, properties such as loss modulus, storage modulus, phase angle, LAOS higher harmonics, Lissajous figure related parameters e.g. G'_{L} and G'_{M} or number of deformations to failure of lamellar polymers and adhesives can be determined and the trend at which the tested material undergoes failure can be identified in a convenient way. Thus, without the need of specialized apparatus, said properties can be detected, facilitating research work and reducing related costs.

Further preferred and/or functional features and embodiments of the invention are disclosed in the dependent claims and in the description. Particularly preferred embodiments are disclosed in the accompanying drawings.

In the drawing:
- Fig. 1: is a schematic front view of a first embodiment of a bending adapter according to the invention,
- Fig. 2a: is a schematic illustration of the bending adapter shown in Fig. 1 in a perspective view,
- Fig. 2b: is a schematic perspective view of a second embodiment of a bending adapter according to the invention,
- Fig. 3a: is a schematic illustration of the bending adapter shown in Fig. 1 and Fig. 2a in a perspective sectional view,
- Fig. 3b: is a schematic illustration of the bending adapter shown in Fig. 2b in a perspective sectional view,
- Fig. 4: is a schematic illustration of a bending fixture of the bending adapter shown in Fig. 1, 2b and Fig. 3b,
and
- Fig. 5: is a schematic illustration of a further embodiment of a bending fixture in a perspective view.

The bending adapter shown in the figures is an example of a bending adapter for use in a rotational rheometer for measuring at least one mechanical property of a sample strip, in particular a polymer film strip. Likewise, various bending fixtures are shown in the figures as examples. These illustrated bending fixtures represent preferred embodiments for interaction with a second bending fixture in order to form a bending adapter according to the invention in each case. The features and further embodiments of the bending adapter according to the invention described below represent preferred embodiments, either considered individually or in combination with each other. Each feature independently or, in particular in combination, allows for flexible and stable installation of the bending adapter on a rotational rheometer.

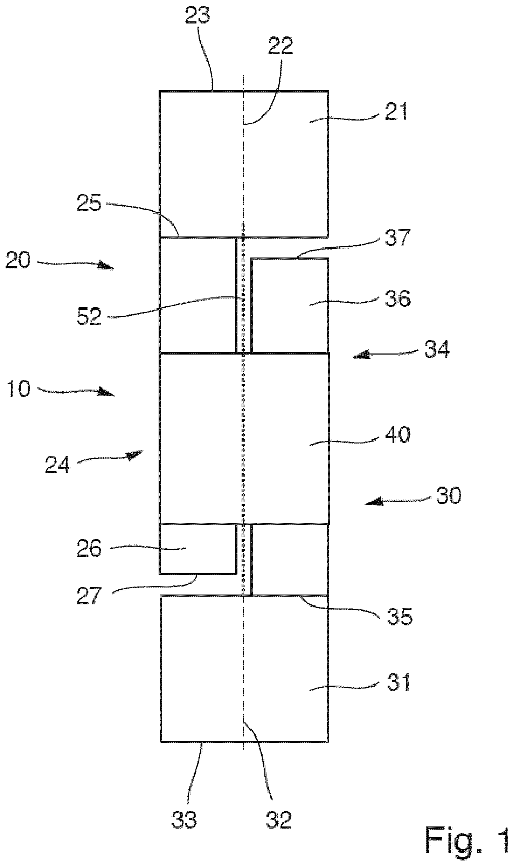

Fig. 1, 2a and 2b as well as Fig. 3a and 3b schematically show the bending adapter 10 according to the invention, designed and adapted for use in a rotational rheometer for measuring at least one mechanical property of a sample strip 40, in particular a polymer film strip or any other thin film material. The bending adapter 10 consists of two bending fixtures 20, 30. As shown in the figures, each bending fixture 20, 30 has a connecting section 21, 31, which has a central axis 22, 32 in the axial direction and, at its one end, a coupling end 23, 33 for connection to a rotational rheometer - not shown in the figures. The connecting section 21, 31 is particularly preferably of at least substantially round cross-sectional geometry. Each bending fixture 20, 30 also has a measuring section 24, 34, which is arranged with a connecting end 25, 35 at the end of the connecting section 21, 31 that is opposite the coupling end 23, 33 of the connecting section 21, 31. The measuring section 24, 34 has a free end 27, 37 at the end opposite the connecting end 25, 35. As shown in Fig. 1, Fig. 2a and 2b as well as Fig. 3a and 3b, the two measuring sections 24, 34 each having a measuring surface 26, 36 extending axially along an imaginary extension 52 of the central axis 22, 32 of the connecting section 21, 31 and outwards from the imaginary extension 52 of the central axes 22, 32 of the connecting sections 21, 31. The two measuring surfaces 26, 36 form a hinge 50 with a sample strip 40 to be measured, which hinge 50 rotating about the imaginary extension 52 of the central axis 22, 32, as shown in Fig. 1, Fig. 2a/b as well as Fig. 3a/b. The measuring sections 24, 34 are arranged relative to one another in such a way that the respective free end 27, 37 of a measuring section 24, 34 of a bending fixture 20, 30 points towards the connecting section 31, 21 of the respective other bending fixture 30, 20.

Preferably, at least one of the two measuring surfaces 26, 36, preferably both measuring surfaces 26, 36, has/have a smooth, sandblasted and/or profiled surface. Further preferably, the measuring section 24, 34 and/or the connecting section 21, 31 are made of a metal, particularly preferably steel, stainless steel, titanium or aluminum. Preferably, the metal can be variably adapted to the desired or prevailing product (sample strip 40) and operating conditions and can be selected either uniformly or differently for the measuring section 24, 34 and the connecting section 21, 31.

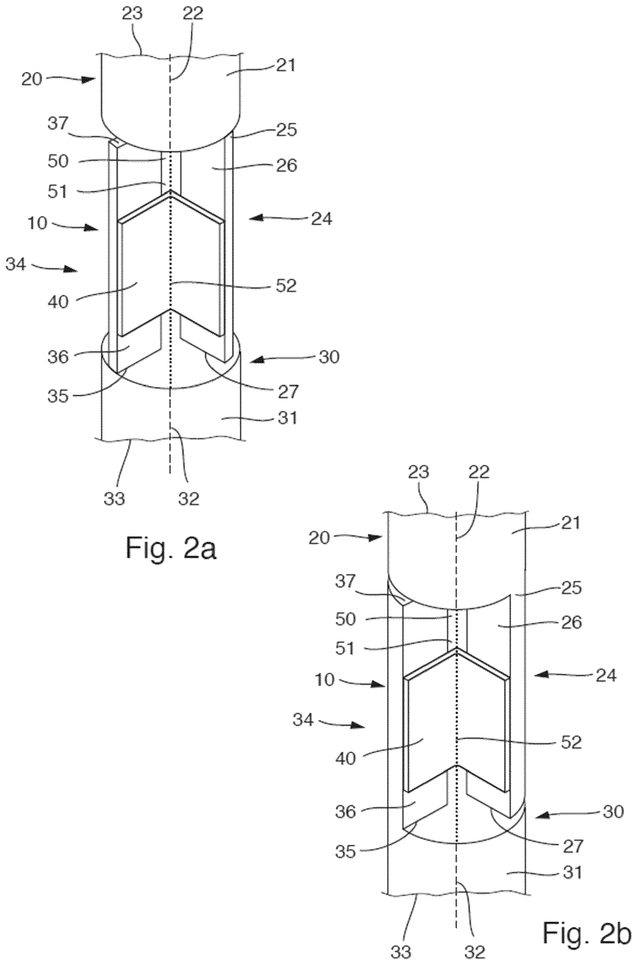

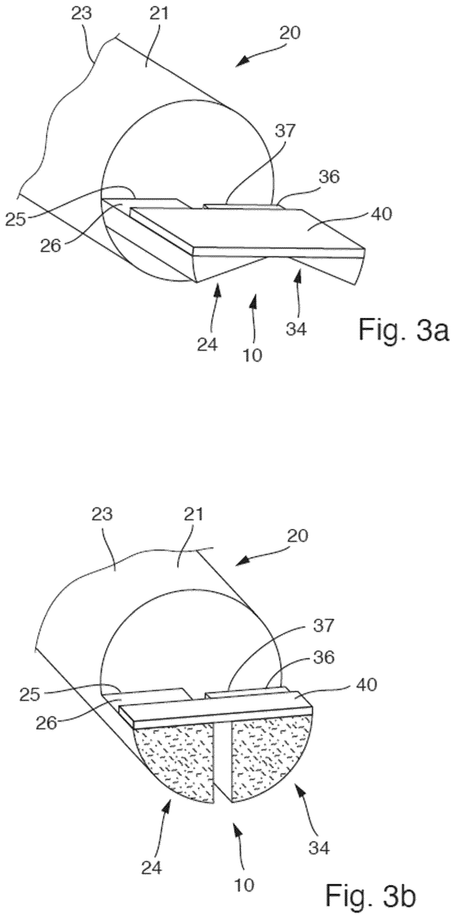

Particularly preferred, at least one of the two bending fixtures 20,30 is movable in an oscillating rotational movement. Further preferably, an oscillation angle 51 between the two bending fixtures 20, 30 is in the range of from 0° to 340°, in particular from 40° to 320°, and particularly preferred in from 50° to 310°. In Fig. 1 and Fig. 3a/3b, an example of an oscillation angle 51 of approximately 180° is shown. This advantageous embodiment allows the sample strip 40 to be attached to the measuring surfaces 26, 36 without significant bending at this oscillation angle 51. In contrast, Fig. 2a and 2b show an example with an oscillation angle 51 of approximately 90°.

As schematically shown in Fig. 1, Fig. 2a and 2b as well as Fig. 3a and 3b, the two measuring sections 24, 34 are arranged at a distance from one another or in other words are spaced apart. This advantageous embodiment can achieve a wider oscillation angle 51 and avoid friction of the two measuring sections 24, 34. As can be also seen in Fig. 1, the two measuring sections 24, 34 are arranged adjacent to one another.

In the embodiments shown in Fig. 2a, Fig. 3a and Fig. 5, the cross-sectional geometry of the measuring section 24, 34 corresponds to a sector of a circle, namely to a sector of 20°.

In the embodiments shown in Fig. 2b and Fig. 3b, the cross-sectional geometry of the measuring section 24, 34 corresponds to a sector of a circle, namely to a quarter of a circle.

Depending on the configuration of the measuring section 24, 34, the corresponding connecting section 21, 31 is preferably configured and adapted to provide a form-fitting connection. In a further preferred embodiment, the measuring section 24, 34 is at least substantially a plate (not shown in the figures). Likewise, the measuring section 24, 34 and/or the connecting section 21, 31 can have a square or polygonal cross-sectional geometry.

Figs. 1 to Fig. 4 schematically show bending fixtures 20, 30 in which the measuring section 24, 34 and the connecting section 21, 31 are made from a single piece. In this advantageous embodiment, the connecting section 21, 31 has a protrusion that forms the measuring section 24, 34. The connecting section 21, 31 has coupling end 23, 33 that is used for direct connection to a rotational rheometer (not shown in the figures).

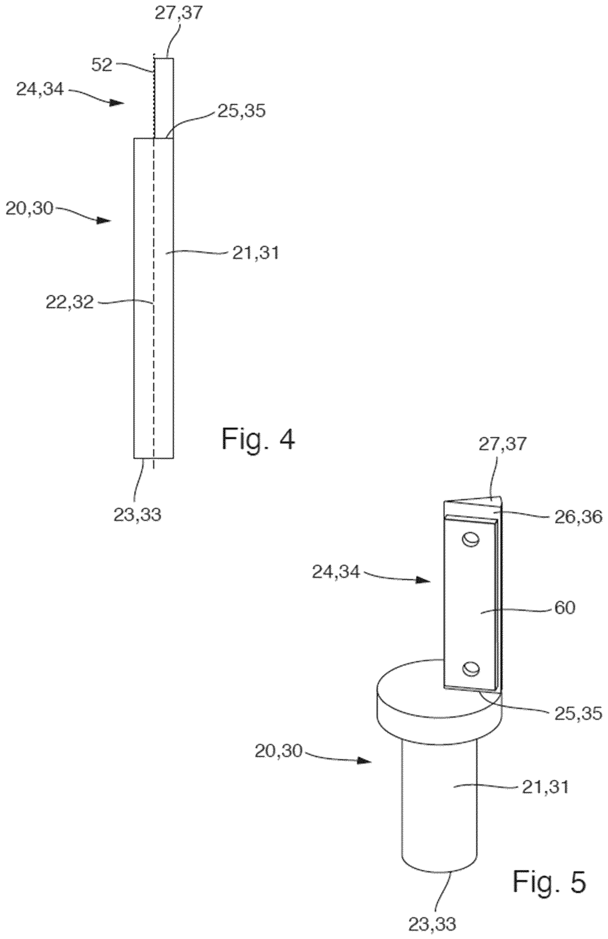

Fig. 5 schematically shows in a further preferred embodiment that the connecting section 21, 31 is configured as an attachment for connection to a shaft. This advantageous embodiment allows the attachment to be easily replaced when worn, avoiding the need to replace the entire bending fixture 20, 30, which is a resource-saving variant. In the embodiment schematically shown in Fig. 5, the measuring surface 26, 36 has a sample holder 60 for holding the sample strip 40 to be measured. This ensures in a simple manner that the sample strip 40 is securely and accurately mounted on the measuring surfaces 26, 36 and thus fixed. The measurement can be carried out safely without the sample strip 40 accidentally coming loose. Such a sample holder 60 is particularly advantageous when measuring the mechanical properties of a sample strip 40 with low or no adhesive properties.

## Claims

1. A bending adapter (10) configured and adapted for use in a rotational rheometer for measuring at least one mechanical property of a sample strip (40), in particular a polymer film strip or any other material in the form of a thin film, consisting of two bending fixtures (20, 30), each bending fixture (20, 30) having a connecting section (21, 31) which has a central axis (22, 32) in the axial direction and, at its one end, a coupling end (23, 33) for connection to the rotational rheometer, and a measuring section (24, 34), which is arranged with a connecting end (25, 35) at the end of the connecting section (21, 31) that is opposite the coupling end (23, 33) of the connecting section (21, 31) and has a free end (27, 37) at the end opposite the connecting end (25, 35), the two measuring sections (24, 34) each having a measuring surface (26, 36) extending axially along an imaginary extension (52) of the central axes (22, 32) of the connecting sections (21, 31) and outwards from the imaginary extension (52) of the central axes (22, 32) of the connecting sections (21, 31), wherein the two measuring surfaces (26, 36) together with a sample strip (40) to be measured form a hinge (50) rotating about the imaginary extension (52) of the central axes (22, 32) and the measuring sections (24, 34) are arranged relative to one another in such a way that the respective free end (27, 37) of a measuring section (24, 34) of a bending fixture (20, 30) points towards the connecting section (31,21) of the respective other bending fixture (30, 20).

2. Bending adapter (10) according to claim 1, **characterized in that** at least one of the two bending fixtures (20, 30) is movable in an oscillating or constant rotational movement.

3. Bending adapter (10) according to claim 1 or 2, **characterized in that** an angle (51) between the two bending fixtures (20, 30) is in the range of from 0° to 340°, in particular from 40° to 320°, and particularly preferred in from 50° to 310°

4. Bending adapter (10) according to at least one of claims 1 to 3, **characterized in that** the measuring section (24, 34) is at least substantially a plate.

5. Bending adapter (10) according to at least one of claims 1 to 4, **characterized in that** the cross-sectional geometry of the measuring section (25, 35) corresponds at least substantially to a section of a circle, particularly preferably a sector of a circle with an angle of from 20° to 90°.

6. Bending adapter (10) according to at least one of claims 1 to 5, **characterized in that** the two measuring sections (24, 34) are arranged adjacent to one another.

7. Bending adapter (10) according to at least one of claims 1 to 6, **characterized in that** the two measuring sections (24, 34) are arranged at a distance from one another.

8. Bending adapter (10) according to at least one of claims 1 to 7, **characterized in that** at least one of the two measuring surfaces (26, 36), preferably both measuring surfaces (26, 36), has/have a smooth, sandblasted and/or profiled surface.

9. Bending adapter (10) according to at least one of claims 1 to 8, **characterized in that** at least one of the two measuring surfaces (26, 36), preferably both measuring surfaces (26, 36), has/have a sample holder (60) for fastening the sample strip (40) to be measured.

10. Bending adapter (10) according to at least one of claims 1 to 9, **characterized in that** the measuring section (24, 34) and/or the connecting section (21, 31) consists of a metal, particularly preferably steel, stainless steel, titanium or aluminum.

11. Use of the bending adapter (10) according to at least one of the claims 1 to 10 in a rotational rheometer for measuring at least one mechanical property of a sample strip (40), in particular a polymer film strip or any other thin film material.

12. Use according to claim 11, for determining the bending and breaking properties of the sample strip (40).
